# EUROPÄISCHE PATENTSCHRIFT

(11) **EP 1 404 733 B1**
(45) Veröffentlichungstag und Bekanntmachung des Hinweises auf die Patenterteilung: **20.01.2010**
(21) Anmeldenummer: 02764621.5
(22) Anmeldetag: 03.07.2002
(51) Int. Cl.: C08G 18/10

(54) **REAKTIVE POLYURETHANE MIT EINEM GERINGEN GEHALT AN MONOMEREN DIISOCYANATEN**
REACTIVE POLYURETHANES HAVING A REDUCED DIISOCYANATE MONOMERS CONTENT
POLYURETHANNES REACTIFS PRESENTANT UNE TENEUR REDUITE EN DIISOCYANATES MONOMERES

(30) Priorität: 10.07.2001 DE 10132571
(43) Veröffentlichungstag der Anmeldung: 07.04.2004
(73) Patentinhaber: Henkel AG & Co. KGaA, 40589 Düsseldorf (DE)
(72) Erfinder: KREBS, Michael, 40724 Hilden (DE)
(86) Internationale Anmeldenummer: PCT/EP2002/007344
(87) Internationale Veröffentlichungsnummer: WO 2003/006521

(56) Entgegenhaltungen:
- WO-A-01/02458
- DE-A- 4 136 490
- US-A- 4 623 709
- US-A- 5 998 538

## Beschreibung

Die vorliegende Erfindung betrifft reaktive Polyurethane mit einem geringen Gehalt an monomeren Diisocyanaten, sowie deren Herstellung und deren Verwendung in reaktiven ein- und zweikomponentigen Kleb-/Dichtstoffen, Montageschäumen, Vergussmassen sowie in Weich-, Hart- und Integralschäumen.

Reaktive Polyurethane verfügen über reaktive Endgruppen, die mit Wasser oder anderen Verbindungen, die über ein acides Wasserstoffatom verfügen, reagieren können. Diese Form der Reaktivität ermöglicht es, die reaktiven Polyurethane in verarbeitbarem Zustand (in der Regel flüssig bis hochviskos) in der gewünschten Art an den gewünschten Ort zu bringen und durch die Zugabe von Wasser oder anderen Verbindungen, die über ein acides Wasserstoffatom verfügen (in diesem Fall als Härter bezeichnet) auszuhärten.
Bei diesen sogenannten 2K-Systemen erfolgt die Zugabe des Härters in der Regel unmittelbar vor der Applikation, im Normalfall mit Hilfe eines Misch- und Dosiersystems, wobei dem Verarbeiter nach der Härterzugabe nur noch eine begrenzte Verarbeitungszeit zur Verfügung steht.
Es ist jedoch ebenfalls möglich, Polyurethane mit reaktiven Endgruppen ohne Zugabe von Härtern alleine durch die Reaktion mit Luftfeuchtigkeit auszuhärten (1 K-Systeme). Solche 1 K-Systeme weisen gegenüber den 2K-Systemen in der Regel den Vorteil auf, dass für den Anwender das oft lästige Mischen der häufig viskosen Komponenten vor der Applikation entfällt.
Zu den üblicherweise in 1 K- oder 2K-Systemen eingesetzten Polyurethanen mit reaktiven Endgruppen zählen beispielsweise die Polyurethane mit bevorzugt endständigen Isocyanat (NCO)-Gruppen.

Um Polyurethane mit endständigen NCO-Gruppen zu erhalten, ist es üblich, polyfunktionelle Alkohole mit einem Überschuss an monomeren Polyisocyanaten, in der Regel Diisocyanate, zur Reaktion zu bringen.

Es ist bekannt, dass am Ende der Umsetzung, unabhängig von der Reaktionszeit, eine gewisse Menge des im Überschuss eingesetzten monomeren Diisocyanats übrig bleibt.
Störend wirkt sich ein Gehalt an monomeren Diisocyanat beispielsweise bei der Verarbeitung von Kleb- und Dichtstoffen auf Basis reaktiver Polyurethane aus.
Schon bei Raumtemperatur können Diisocyanate, wie IPDI oder TDI, einen nicht zu vernachlässigen Dampfdruck aufweisen. Dieser merkliche Dampfdruck ist insbesondere bei einem Sprühauftrag gravierend, da hierbei signifikante Mengen an Isocyanatdämpfen über dem Applikationsgerät auftreten können, die wegen ihrer reizenden und sensibilisierenden Wirkung toxisch sind.
Während Dichtstoffe üblicherweise bei Raumtemperatur verarbeitet werden, findet die Verarbeitung von Klebstoffen häufig bei erhöhter Temperatur statt. So liegen die Verarbeitungstemperaturen von Schmelzklebstoffen zwischen 100°C bis 200°C, die von Kaschierklebstoffen zwischen 30°C und 150°C. Bei diesen Temperaturen und weiteren spezifischen Anwendungsparametem, wie z.B. Luftfeuchtigkeit, bilden beispielsweise die weitverbreiteten bicyclischen Diisocyanate, insbesondere Diphenylmethandiisocyanate, gas- und aerosolförmige Emissionen. Seitens des Anwenders werden daher aufwendige Maßnahmen zum Schutz der das Produkt verarbeiteten Personen, insbesondere aufwendige Maßnahmen zur Einhaltung der Atemluft, gesetzlich vorgegeben durch die höchstzulässige Konzentration von Arbeitsstoffen von Gas, Dampf oder Schwebstoff am Arbeitsplatz (jährlich aktualisierte MAK-Wert-Liste der technischen Regel TRGS 900 des Bundesministeriums für Arbeit und Soziales).
Da Schutz- und Reinigungsmaßnahmen in der Regel mit hohen finanziellen Investitionen oder Kosten verbunden sind, besteht seitens der Anwender ein Bedürfnis nach Produkten, die einen möglichst niedrigen Anteil an monomeren Diisocyanaten aufweisen. Aber nicht nur die Anwendung von Reaktivklebstoffen, die noch monomeres Polyisocyanat enthalten, führt zu Problemen, sondern bereits auch das Inverkehrbringen. So fallen Stoffe und Zubereitungen, die beispielsweise mehr als 0,1 % freies MDI oder TDI enthalten, unter die Gefahrstoffverordnung und sind entsprechend zu kennzeichnen. Mit der Kennzeichnungspflicht sind spezielle Maßnahmen zur Verpackung und dem Transport verbunden.

Das Vorhandensein von monomeren, nicht umgesetzten Ausgangs-Diisocyanat führt auch in der Weiterverarbeiturig häufig zu Problemen. So können monomere Diisocyanate aus der Beschichtung oder Verklebung in die beschichteten oder verklebten Materialien hinein "wandem". Solche wandernden Bestandteile werden in Fachkreisen häufig als "Migrate" bezeichnet. Durch Kontakt mit Feuchtigkeit werden die Isocyanatgruppen der Migrate kontinuierlich zu Aminogruppen und weiteren Metaboliten umgesetzt.
In Polyurethan-Integralschäumen, die beispielsweise bei der Herstellung von Lenkrädern in Kraftfahrzeugen verwendet werden, sind diese Migrate unerwünscht, da ein Kontakt der aus den migrierten Diisocyanaten entstandenen Amine mit der Haut nicht auszuschliessen ist.
Auch im Verpackungsbereich, speziell bei Lebensmittelverpackungen, sind Migrate unerwünscht. Einerseits kann die Wanderung der Migrate durch das Verpackungsmaterial hindurch zu einer Kontamination des verpackten Gutes führen, andererseits sind, abhängig von der Menge des migratfähigem freien monomeren Diisocyanate, lange Wartezeiten notwendig, bevor das Verpackungsmaterial "migratfrei" ist und verwendet werden darf.
Der Gehalt der durch migrierte Diisocyanate entstehenden Amine, insbesondere der primären aromatischen Amine, muß unter der auf Anilin-hydrochlorid bezogenen Nachweisgrenze von 0,2 Mikrogramm Anilinhydrochlorid/100 ml Probe liegen (Bundesinstitut für gesundheitlichen Verbraucherschutz und Veterinärmedizin, BGW, nach amtlicher Sammlung von Untersuchungsverfahren nach § 35 LMBG - Untersuchung von Lebensmitteln/Bestimmung von primären aromatischen Aminen in wäßrigen Prüflebensmitteln).
Ein weiterer unerwünschter Effekt, der durch die Migration monomerer Diisocyanate hervorgerufen werden kann, ist der sogenannte Antisiegeleffekt bei der Herstellung von Beuteln oder Tragetaschen aus kaschierten Kunststoff-Folien: Häufig sind die kaschierten Kunststoff-Folien mit einem Gleitmittel auf Basis von Fettsäureamiden beschichtet. Durch Reaktion von migriertem monomeren Diisocyanat mit dem Fettsäureamid und/oder Feuchtigkeit werden an der Folienoberfläche Harnstoffverbindungen gebildet, die einen Schmelzpunkt besitzen, der über der Versiegelungstemperatur der Kunststoff-Folien liegen kann. Dadurch entsteht eine artfremde Antisiegel-Schicht zwischen den zu versiegelnden Folienteilen, die einer einheitliche Siegel-Nahtbildung entgegenwirkt.

Für die genannten Anwendungsfelder ist daher die Entwicklung von reaktiven Polyurethanen und darauf basierenden reaktiven ein- und zweikomponentigen Kleb-/Dichtstoffen, Montageschäumen, Vergussmassen sowie Weich-, Hart- und Integralschäume mit einem drastisch reduzierten Anteil an monomeren Diisocyanaten in hohem Maße wünschenswert.

So beschreibt die EP-A-316738 ein Verfahren zur Herstellung von Urethangruppen aufweisenden Polyisocyanaten mit einem Urethangruppen-freien Ausgangs-Diisocyanat von maximal 0,4 Gew.-% durch Umsetzung von aromatischen Diisocyanaten mit mehrwertigen Alkoholen und anschließender Entfernung des nicht umgesetzten, überschüssigen Ausgangs-Diisocyanats,
wobei die destillative Entfernung des überschüssigen Ausgangs-Diisocyanat in Gegenwart eines Isocyanatgruppen aufweisenden aliphatischen Polyisocyanats durchgeführt wird.

Die DE 3815237 A1 beschreibt ein Verfahren zur Reduzierung des Monomerengehalts von Urethan- oder Isocyanurat-modifizierten Polyisocyanaten auf Basis von 2,4-TDI oder dessen Gemisch mit bis zu 35 Gew.-% an 2,6-TDI oder IPDI. Die Monomerenreduzierung erfolgt durch ggf. Dünnschichtdestillation und anschließende Umsetzung mit Wasser.

Die EP-A-0393903 beschreibt ein Verfahren zur Herstellung von Polyurethan-Prepolymeren, bei dem in einem ersten Schritt monomeres Diisocyanat mit einem Polyol umgesetzt wird. Anschließend wird ein Katalysator in ausreichender Menge zugegeben, so dass ein erheblicher Teil der restlichen Isocyanat-Funktionalität in Allophanat-Funktionalität übergeführt wird. Nach Erreichen des theoretischen NCO-Gehaltes wird die Reaktion durch rasches Abkühlen und Zusatz von Salicylsäure abgestoppt.
Die WO 01/40342 beschreibt reaktive Polyurethan-Kleb-/Dichtstoff-Zusammensetzungen auf der Basis von Umsetzungsprodukten aus Polyolen und hochmolekularen Diisocyanaten, wobei in einer ersten Stufe eine Diolkomponente mit einem stöchiometrischen Überschuß an monomeren Diisocyanat zu einem hochmolekularen Diisocyanat umgesetzt wird und das hochmolekulare Diisocyanat beispielsweise durch Zugabe eines Nichtlösers für das hochmolekulare Diisocyanat vom monomeren Diisocyanat aus dem Reaktionsgemisch ausgefällt wird. In einem zweiten Schritt wird dieses hochmolekulare Diisocyanat mit einem Polyol zu einem reaktiven Prepolymer mit Isocyanat-Endgruppen umgesetzt.

Die DE 4136490 A1 betrifft lösungsmittelfreie 2K-Beschichtungs-, Dicht- und Klebstoffsysteme mit niedrigen Migrationswerten aus Polyolen und Isocyanatgruppen enthaltenden Präpolymeren. Die NCO-Präpolymere werden hergestellt durch Umsetzung von Polyolgemischen der mittleren Funktionalität 2,05 bis 2,5 mit mindestens 90 Mol-% sekundären Hydroxylgruppen und Diisocyanaten mit unterschiedlich reaktiven Isocyanatgruppen in einem Verhältnis der Isocyanatgruppen zu Hydroxylgruppen von 1,6 bis 1,8 zu 1.
Tabelle 1 auf Seite 5 zeigt, daß nach der Lehre von DE 4136490 A1 hergestellte MDI-Präpolymere einen Monomergehalt von größer 0,3% aufweisen.

Trotz des vorgenannten Standes der Technik besteht weiterhin Bedarf an reaktiven Polyurethanen mit einem niedrigen Anteil an monomeren Diisocyanaten, die sich sowohl für den Einsatz als reaktive ein- und zweikomponentige Kleb-/Dichtstoffe, insbesondere für reaktive Schmelzklebstoffe oder Kaschierklebstoffe, als auch zur Herstellung von Montageschäumen, Vergussmassen sowie Weich-, Hart- und Integralschäumen eignen.
Eine Aufgabe der Erfindung war es daher, Polyurethane für die Verwendung als Kleb- oder Dichtstoffe zur Verfügung zu stellen, die monomerfrei sind oder einen möglichst niedrigen Anteil an monomeren Diisocyanaten aufweisen. Idealerweise sollen diese Polyurethane frei von einer Kennzeichnungspflicht sein.
Zur Erzielung des niedrigen Anteils an monomeren Diisocyanaten werden nach dem Stand der Technik teilweise aufwendige und kostenintensive Reinigungsschritte durchgeführt. Konkrete Beispiele sind das Entfernen von überschüssigen monomeren Diisocyanaten durch selektive Extraktion, beispielsweise mit überkritischem Kohlendioxid, Dünnschichtdestillation, Dünnfilmverdampfung oder das Ausfällen des reaktiven Polyurethans aus dem Reaktionsgemisch mit monomeren Diisocyanaten. Eine weitere Aufgabe der Erfindung war es daher, reaktive Polyurethane zur Verfügung zu stellen, die ohne die aufwendigen Aufarbeitungsschritte einen niedrigen Gehalt an monomeren Diisocyanaten aufweisen.

Die erfindungsgemäße Lösung der Aufgabe ist den Patentansprüchen zu entnehmen.
Sie besteht im wesentlichen in der Bereitstellung von reaktiven Polyurethanen mit einem NCO-Gehalt von 4-12% NCO und einem Gehalt an monomeren asymmetrischen Diisocyanaten von 0,01 bis 0,3 Gew.-%, erhältlich durch Reaktion von
I. mindestens einem monomeren asymmetrischen Diisocyanat mit einem Molekulargewicht von 160 g/mol bis 500 g/mol mit
II. mindestens einem Diol mit einem Molekulargewicht von 60g/mol bis 2000g/mol.
wobei das Verhältnis der Isocyanatgruppen zu Hydroxylgruppen 1,05 zu 1 bis 2,0 zu 1 beträgt,
a) bei einer Temperatur von 20°C bis 130°C, bevorzugt von 25°C bis 100°C, insbesondere bevorzugt von 40°C bis 75°C, sowie
b) gegebenenfalls in Gegenwart eines Katalysators und
c) gegebenenfalls in Gegenwart eines aprotischen Lösungsmittels,
ohne zusätzliche Aufarbeitungs- und Reinigungsschritte. -

Das so erhaltene reaktive Polyurethan enthält 0,01 bis 0,3 Gew.-%, bevorzugt 0,02 bis 0,1 Gew.-% und insbesondere bevorzugt 0,02 bis 0,08 Gew.-% monomeres asymmetrisches Diisocyanat.
Im Rahmen dieser Erfindung sind unter reaktiven Polyurethanen Verbindungen zu verstehen, die bei Raumtemperatur fest, pastös oder flüssig sind, Urethangruppen enthalten und über noch freie Isocyanat (NCO)-Gruppen verfügen.

Der NCO-Gehalt in diesem erfindungsgemäßen reaktiven Polyurethan beträgt 4 bis 12 % NCO, bevorzugt 4,5 bis 10 % NCO und insbesondere bevorzugt 5 bis 8 % NCO.
Die Viskosität des erfindungsgemäßen reaktiven Polyurethans, gemessen nach Brookfield (ISO 255), beträgt bei 100°C 20 mPas bis 3000 mPas, bevorzugt 25mPas bis 2000 mPas.

Monomere asymmetrische Diisocyanate im Sinne dieser Erfindung sind solche aromatische, aliphatische oder cycloaliphatische Diisocyanate mit einem Molekulargewicht von 160g/mol bis 500g/mol, die NCO-Gruppen mit einer unterschiedlichen Reaktivität gegenüber Diolen besitzen. Die unterschiedliche Reaktivität der NCO-Gruppen des Diisocyanats entsteht durch unterschiedlich benachbarte Substituenten zu den NCO-Gruppen am Molekül, die beispielsweise durch sterische Abschirmung die Reaktivität der einen NCO-Gruppe im Vergleich zur anderen NCO-Gruppe herabsetzen und/oder durch unterschiedliche Bindung einer NCO-Gruppe an den Molekülrest, beispielsweise in Form einer primären oder sekundären NCO-Gruppe.
Beispiele für geeignete aromatische asymmetrische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-2,4'-diisocyanat (MDI) sowie Mischungen des 4,4'-Diphenylmethandiisocyanats mit dem 2,4'-MDI-Isomeren und 1,3-Phenylendiisocyanat.
Beispiele für geeignete cycloaliphatische asymmetrische Diisocyanate sind z.B. 1-Isocyanatomethyl-3-isocyanato-1,5,5-trimethyl-cyclohexan (Isophorondiisocyanat, IPDI), 1-Methyl-2,4-diisocyanato-cyclohexan oder Hydrierungsprodukte der vorgenannten aromatischen Diisocyanate, insbesondere hydriertes MDI in isomerenreiner Form, bevorzugt hydriertes 2,4'-MDI.

Beispiele für aliphatische asymmetrische Diisocyanate sind 1,6-Diisocyanato-2,2,4-trimethylhexan, 1,6-Diisocyanato-2,4,4-trimethylhexan und Lysindiisocyanat.

Der Einsatz von 2,2'/2,4'/4,4'MDI-Mischungen beispielsweise zur Herstellung von Polyurethan-(PUR)-Klebstoffen, die einen Anteil des 2,4'MDI-Isomeren von über 75 % in der Mischung haben, sind lange Zeit bekannt.
Im Rahmen der Erfindung wird als monomeres asymmetrisches Diisocyanat das Diphenylmethan-2,4'-Diisocyanat (2,4'-MDI) mit einem Gehalt an 4,4'-MDI und 2,2'-MDI von kleiner 25 %, bevorzugt von kleiner 5 % und insbesondere bevorzugt von kleiner 2,5 % eingesetzt. Insbesondere liegt der Gehalt an 2,2'-MDI unter 0,4 %.

In einer besonderen Ausführungsform der Erfindung werden die Polyisocyanate oder verkappten Polyisocyanate dem Reaktionsgemisch aus monomeren asymmetrischen Diisocyanat und Diol zugegeben, nachdem sich das monomere asymmetrische Diisocyanat bereits weitestgehend umgesetzt hat.

In einer weiteren besonderen Ausführungsform der Erfindung wird möglichst selektiv die reaktivere NCO-Gruppe des monomeren asymmetrischen Diisocyanats mit einer Schutzgruppe blockiert. Das Blockierungsmittel ist dabei so gewählt, daß es bei der Umsetzung der weniger reaktiven NCO-Gruppe des blockierten monomeren asymmetrischen Diisocyanats mit dem entsprechenden Polyol nicht abspaltet, daß heißt, die Umsetzung erfolgt unter relativ milden Bedingungen, beispielsweise bei Temperaturen bis maximal 70°C und ggf. in Gegenwart eines apolaren Lösungsmittels. Zur Überwindung der Isocyanat-Blockierung und damit zur Aktivierung des mit dem blockierten Isocyanat aufgebauten Reaktivklebstoffs muß eine thermische Aktivierung durchgeführt werden. Aktivierungstemperaturen für solche PU-Reaktivklebstoffe liegen etwa im Bereich von 70°C bis 180°C.
Vorzugsweise wird während oder nach der Aktivierung das Blockierungsmittel aus dem Reaktionsansatz entfernt, beispielsweise durch Destillation.
Die Blockierung kann mit den üblichen Mitteln erfolgen, z.B. Butanonoxim, Phenol, Acetessigester, Malonester, Dimethylpyrazol oder Caprolactam. Vorzugsweise wird Caprolactam verwendet, es sind jedoch auch Kombinationen aus mehreren der genannten Verbindungen möglich.

Die zur Herstellung der erfindungsgemäßen reaktiven Polyurethane verwendeten Diole haben ein Molekulargewicht von 60g/mol bis 2000g/mol, bevorzugt von 200g/mol bis 1500g/mol. Maßgeblich für das Molekulargewicht ist die OH-Zahl des Diols, bestimmt nach DIN 53240.
Grundsätzlich können hierfür alle linearen oder schwach verzweigten C2-C18-Alkandiole verwendet werden. Weiterhin können die niedermolekularen Polyether verwendet werden sowie niedermolekulare Alkoxylierungsprodukte von aromatischen Dihydroxyverbindungen (Diphenolen).
Insbesondere sind Diole geeignet, die über sekundäre Hydroxy-Gruppen verfügen. Konkrete Beispiele für die erfindungsgemäß zu verwendenden Diole sind Ethylenglycol, 1,2-Propandiol, 1,3-Propandiol, 2,2-Dimethyl-1,3-propandiol, 2-Methylpropandiol, 1,6-Hexandiol, 2,4,4-Trimethylhexandiol-1,6, 2,2,4-Trimethylhexandiol-1,6, 1,4-Cyclohexandimethanol, Diethylenglycol, Triethylenglycol, Tetraethylenglycol, Dipropylenglycol, Tripropylenglycol, Tetrapropylenglycol, Poly(oxytetramethylen)glycol, Homopolymere des Polyethylenglykols mit einem durchschnittlichen Molekulargwicht (Zahlenmittel Mₙ) von bis 2000, Homopolymere des Polypropylenglykols mit einem durchschnittlichen Molekulargwicht (Zahlenmittel Mₙ) von bis 2000, Blockcopolymere und statistische (Random-) Copolymere aus Ethylenglykol und Propylenglykol mit einem durchschnittlichen Molekulargwicht (Zahlenmittel Mₙ) von bis 2000, Alkoxylierungsprodukte des Bisphenols A, Alkoxylierungsprodukte des Bisphenols F, der isomeren Dihydroxyanthracene, der isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole.
Weiterhin werden als Diole Umsetzungsprodukte niedermolekularer polyfunktioneller Alkohole mit Alkylenoxiden, sogenannte Polyether eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-Diphenylpropan mit Ethylenoxid, Propylenoxid oder Butylenoxid oder Gemischen aus zwei oder mehr davon.

In einer besonders Ausführungsform der Verbindung werden die monomeren asymmetrischen Diisocyanate mit einem Gemisch aus Diol und Polyol umgesetzt. Bevorzugt enthält diese Mischung 1 bis 40 Gew.-% eins Polyols aus der Gruppe Glycerin, Trimethylolethan oder Trimethylolpropan, Pentaerythrit oder Zuckeralkohole, oder Gemisch aus zwei oder mehr davon, wobei die Polyole mit den oben genannten Alkylenoxiden zu Polyetherpolyolen umgesetzt werden können. Geeignet sind sowohl Random- als auch Block-Polyetherpolyole mit einem Molekulargewicht von etwa 100g/mol bis 1800g/mol.

In einer besonderen Ausführungsform der Erfindung wird ein Gemisch aus einem Diol mit einem Molekulargewicht von 60 g/Mol bis 2000 g/Mol und einem Polyol mit einem Molekulargewicht (Mₙ) von 2000g bis 20000 g/Mol, bevorzugt von 4000 bis 8000 g/Mol, eingesetzt. Als Polyol geeignet ist beispielsweise ein Polymer ausgewählt aus einer Gruppe enthaltend Polyester, Polyether, Polyacetale oder Polycarbonate. Der Anteil des Polyols im Gemisch mit Diol beträgt 5 bis 30 Gew.-%.

Die erfindungsgemäßen reaktiven Polyurethane enthalten bevorzugt zusätzlich Katalysatoren, die die Bildung des reaktiven Polyurethans bei der Herstellung beschleunigen. Es wurde überraschend gefunden, daß insbesondere der Einsatz von metallorganischen Verbindungen als Katalysator zu Polyurethanen mit sehr geringen Restmonomergehalt führt. Als erfindungsgemäß einsetzbare Katalysatoren eignen sich z.B. die metallorganischen Verbindungen des Zinns, Bleis, Eisens, Titans, Wismuts oder Zirkoniums, wie Tetraisopropyltitanat, Blei-Phenyl-Ethyl-Dithiocarbaminat, Zinn(II)salze von Carbonsäuren, z.B. Zinn-II-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Besonders bevorzugte Katalysatoren im Rahmen der Erfindung sind metallorganische Verbindungen aus der Gruppe der Zinn (IV)-Verbindungen. Konkrete Verbindungen sind Dibutyl- und Dioctyl-zinndiacetat, -maleat, -bis-(2-ethylhexoat), -dilaurat, -dichlorid, -bisdodecylmercaptid, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethyl-hexylthiolat), Dibutyl- und Dioctylzinndidodecylthiolat, Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl-und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinn-bis(thioethylenglykol-2-ethylhexoat), Bis(β-methoxycarbonyl-ethyl)-zinn-bis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Als Bismut-organische Verbindungen werden insbesondere Bismut-Carboxylate eingesetzt, wobei die Carbonsäuren 2 bis 20 C-Atome, bevorzugt 4 bis 14-Atome, besitzen. Als Säuren seien ausdrücklich genannt: Buttersäure, Capronsäure, Caprylsäure, Caprinsäure, Laurinsäure, Myristinsäure, Palmitinsäure, Stearinsäure, Arachinsäure, Isobuttersäure sowie 2-Ethylhexansäure. Es können auch Mischungen von Bismutcarboxylaten mit anderen Metallcarboxylaten, beispielsweise Zinncarboxylaten eingesetzt werden.
Weitere einsetzbare Katalysatoren sind Basen wie Alkali-Hydroxide, -Alkoholate und -Phenolate. Hierbei ist zu beachten, daß diese Katalysatoren unter Umständen unerwünschte Nebenreaktionen, beispielsweise die Trimerisation, katalysieren.

Ein weiterer Gegenstand der vorliegenden Erfindung ist ein Verfahren zur Herstellung von reaktiven Polyurethanen mit einem NCO-Gehalt von 4-12% NCO und einem Gehalt an monomeren asymmetrischen Diisocyanaten von 0,01 bis 0,3 Gew.-% durch Reaktion von
I. mindestens einem monomeren asymmetrischen Diisocyanat mit einem Molekulargewicht von 160 g/mol bis 500 g/mol mit
II. mindestens einem Diol mit einem Molekulargewicht von 60g/mol bis 2000g/mol,
wobei das Verhältnis der Isocyanatgruppen zu Hydroxylgruppen von 1,05 zu 1 bis 2,0 zu 1 beträgt,
a) bei einer Temperatur von 20°C bis 130°C, bevorzugt von 25°C bis 100°C, sowie
b) gegebenenfalls in Gegenwart eines Katalysators und
c) gegebenenfalls in Gegenwart eines aprotischen Lösungsmittels,
ohne zusätzliche Aufarbeitungs- und Reinigungsschritte.

Die Reaktion der monomeren asymmetrischen Diisocyanate mit den Diolen erfolgt bei einer Temperatur zwischen 20°C bis 130°C, bevorzugt zwischen 25 bis 100°C und insbesondere bevorzugt zwischen 40 bis 75°C.

In einer besonderen Ausführungsform erfolgt die Umsetzung der monomeren asymmetrischen Diisocyanate mit den Diolen bei Raumtemperatur.
In einer weiteren besonderen Ausführungsform erfolgt die Umsetzung der monomeren asymmetrischen Diisocyanate mit den Diolen zwischen 50°C und 80°C ohne kontinuierliche mechanische Durchmischung, beispielsweise durch Rühren, des Reaktionsgemisches.
Dies hat den Vorteil, dass die Reaktion anstelle eines Reaktors in einem Fass, Container oder Tank durchgeführt werden kann.

In einer besonders bevorzugte Ausführungsform wird die Reaktion zwischen 30°C und 100°C in Gegenwart einer Zinn (IV)-Verbindung als Katalysator durchgeführt.

Das NCO/OH-Verhältnis in der ersten Reaktionsstufe beträgt 1,1 bis 2,0 bevorzugt 1,2 bis 1,95 und insbesondere bevorzugt 1,4 bis 1,9.

In einer weiteren besonderen Ausführungsform wird die Selektivität der Reaktion weiter erhöht, indem die monomeren asymmetrischen Diisocyanate mit den Diolen in aprotischen Lösungsmitteln umgesetzt werden. Der gewichtsmäßige Anteil von monomeren asymmetrischen Diisocyanaten und Diolen in der Mischung mit dem aprotischen Lösungsmittel liegt bei 20 - 80 Gew.-%, bevorzugt 30 - 60 Gew.-% und insbesondere bevorzugt bei 35 - 50 Gew.-%. Die Umsetzung in den aprotischen Lösungsmitteln erfolgt bei Temperaturen im Bereich von 20 °C bis 100 °C, bevorzugt 25 °C bis 80 °C und insbesondere bevorzugt von 40 °C bis 75 °C. Unter aprotischen Lösungsmitteln sind beispielsweise halogenhaltige organische Lösungsmittel zu verstehen, bevorzugt werden aber Aceton, Methylisobutylketon oder Ethylacetat.

In einer weiteren besonderen Ausführungsform wird nach Abschluss der Reaktion das Lösungsmittel abdestilliert. Das erhaltene reaktive Polyurethan enthält maximal 0,3 Gew.-%, vorzugsweise maximal 0,1 Gew.-% und insbesondere maximal 0,03 Gew.-% monomeres Diisocyanat, bezogen auf das reaktive Polyurethan. Der Gewichts-Anteil des monomeren Diisocyanats wird gaschromatographisch, mittels Hochdruckflüssigkeitschromatographie (HPLC) oder mittels Gelpermeationschromatographie (GPC) bestimmt.
Die Viskosität des erfindungsgemäßen reaktiven Polyurethans, gemessen nach Brookfield (ISO 2555), beträgt bei 100 °C 20 mPas bis 3000 mPas, bevorzugt 50 mPas bis 1500 mPas und insbesondere bevorzugt 100 mPas bis 1000 mPas.

Das derartig hergestellte monomerenfreie bzw. monomerenarme reaktive Polyurethan wird in einem zweiten Reaktionsschritt bei 90° bis 150° C, bevorzugt 110 ° bis 130 °C in an sich bekannter Weise mit Polyolen zu einer reaktiven Polyurethan-Zusammensetzung mit Isocyanat-Endgruppen umgesetzt. Dabei beträgt das NCO/OH-Verhältnis 1,2:1 bis 5:1. Da das reaktive Polyurethan bereits weitestgehend monomerenfrei ist, können im zweiten Reaktionsschritt auch höhere NCO/OH-Verhältnisse bis 10:1 verwendet werden.

Als Polyole können dabei eine Vielzahl von höhermolekularen Polyhydroxyverbindungen verwendet werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die erfindungsgemäßen Zusammensetzungen als Polyole eingesetzt werden.
In einer weiteren besonderen Ausführungsform der Erfindung wird in dem zweiten Reaktionsschritt eine Verbindung verwendet, welche sowohl mindestens eine durch Bestrahlung polymerisierbare funktionelle Gruppe als auch mindestens ein acides Wasserstoffatom aufweist.
Unter einer ein acides Wasserstoffatom aufweisenden Verbindung wird eine Verbindung verstanden, die ein nach dem Zerewittinoff Test bestimmbares, an ein N-, O- oder S-Atom gebundenes, aktives Wasserstoffatom aufweist. Hierunter fallen insbesondere die Wasserstoffatome von Wasser, Carboxy-, Amino-, Imino-, Hydroxy-, und Thiolgruppen.
Unter Bestrahlung ist insbesondere die Bestrahlung mit UV-Licht oder mit Elektronenstrahlen zu verstehen. Besonders bevorzugt weist die Verbindung als durch Bestrahlung mit UV-Licht oder mit Elektronenstrahlen polymerisierbare funktionelle Gruppe, eine Gruppe mit olefinisch ungesättigter Doppelbindung auf. Die molare Masse der Verbindung liegt im Bereich von 100 bis 15 000 g/mol, bevorzugt von 100 bis 10 000 g/mol und besonders bevorzugt von 100 bis 8000 g/mol.

Es sind alle üblicherweise in Klebstoffen einsetzbaren polymeren Verbindungen geeignet, beispielsweise Polyacrylate, Polyester, Polyether, Polycarbonate, Polyacetale, Polyurethane, Polyolefine, oder Kautschukpolymere wie Nitril- oder Styrol/Butadien-Kautschuk, sofern sie mindestens eine durch Bestrahlung mit UV-Licht oder mit Elektronenstrahlen polymerisierbare funktionelle Gruppe und mindestens ein acides Wasserstoffatom aufweist.

Vorzugsweise werden jedoch Polyacrylate, Polyesteracrylate, Epoxyacrylate oder Polyurethanacrylate eingesetzt, da die genannten Polymeren eine besonders einfache Möglichkeit bieten, die erfindungsgemäß erforderlichen funktionellen Gruppen am Polymermolekül anzubringen.
Geeignet sind lineare und/oder schwach verzweigte OH-Gruppen tragende Polyacrylate. Solche Polyacrylate sind beispielsweise erhältlich durch Polymerisation von ethylenisch ungesättigten Monomeren, die OH-Gruppen tragen. Solche Monomeren sind beispielsweise durch die Veresterung von ethylenisch ungesättigten Carbonsäuren und difunktionellen Alkoholen erhältlich, wobei der Alkohol in der Regel nur in einem leichten Überschuß vorliegt. Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Acrylatester bzw. Hydroxyalkyl(meth)acrylate sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.
Acrylester-Copolymer-Polyole können beispielsweise durch die radikalische Copolymerisation von Acrylsäureestern, bzw. Methacrylsäureestern mit Hydroxyfunktionellen Acrylsäure- und/oder Methacrylsäure-Verbindungen wie Hydroxyethyl(meth)acrylat oder Hydroxypropyl(meth)acrylat hergestellt werden. Wegen dieser Herstellungsweise sind die Hydroxylgruppen bei diesen Polyolen in der Regel statistisch verteilt, so dass es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Unter bestimmten Umständen, insbesondere bei Anwesenheit von Wasser, beispielsweise auf feuchten Oberflächen, kann es bei der Anwendung von Reaktivklebstoffen auf Basis von Polyurethan-Prepolymeren mit NCO-Endgruppen zur Entwicklung von Kohlendioxid kommen, was beispielsweise nachteilige Effekte auf die Oberflächenstruktur haben kann. Weiterhin haften solche Reaktivklebstoffe häufig nicht auf glatten inerten Oberflächen, beispielsweise auf Oberflächen aus Glas, Keramik, Metall oder dergleichen, was in manchen Fällen die Verwendung eines Primers vor Auftrag des Reaktivklebstoffes notwendig macht. Um eine feste und dauerhafte Verbindung von Reaktivklebstoffen auf Polyurethanbasis und beispielsweise den oben genannten Oberflächen zu ermöglichen, wird als reaktive Endgruppe eine Silicium-organische Verbindung, bevorzugt eine Alkoxysilangruppe, mit der allgemeinen Strukturformel (I) in dem zweiten Reaktionsschritt verwendet:

X-A-Si(Z)ₙ(OR)₃₋ₙ, (I).

X steht dabei für einen Rest mit mindestens einer reaktiven funktionellen Gruppe mit acidem Wasserstoff, beispielsweise für einen Rest der mindestens eine OH-, SH-, NH-, NH₂- -COOH oder Anhydridgruppe oder ein Gemisch aus zwei oder mehr solcher Gruppen aufweist. In einer bevorzugten Ausführungsform der Erfindung steht X für OH, SH, H₂N-(CH₂)₂-NH, (HO-C₂H₄)₂N oder NH₂, A für CH₂, CH₂-CH₂ oder CH₂-CH₂-CH₂ oder einen linearen oder verzweigten, gesättigten oder ungesättigten Alkylenrest mit 2 bis etwa 12 C-Atomen oder für einen Arylenrest mit etwa 6 bis etwa 18 C-Atomen oder einem Arylenalkylenrest mit etrwa 7 bis etwa 19 C-Atomen oder einen mit Alkyl-, Cycloalkyl- oder Arylgruppen substituierten Siloxanrest mit etwa 1 bis etwa 20 Si-Atomen, Z steht für -O-CH₃, - CH₃, -CH₂-CH₃ oder für einen linearen oder verzweigten, gesättigten oder ungesättigten Alkylrest oder Alkoxyrest mit 2 bis etwa 12 C-Atomen und R steht für -CH₃, -CH₂-CH₃, -CH₂-CH₂-CH₃ oder für einen linearen oder verzweigten, gesättigten oder ungesättigten Alkylrest mit 2 bis etwa 12 C-Atomen. Die Variable n steht in einer bevorzugten Ausführungsform der Erfindung für 0, 1 oder 2.

Prinzipiell richtet sich die Auswahl des Polyols oder der Polyole nach der Verwendungsart dieser Polyurethan-Zusammensetzung mit reaktiven Isocyanat-Endgruppen. Bei hochviskosen oder pastösen flüssigen Kleb-/Dichtstoffen werden vorzugsweise zumindest überwiegend flüssige Polyole eingesetzt. Bei zweikomponentigen Kleb-/Dichtstoffen kann die eine Komponente die Polyurethan-Zusammensetzung mit reaktiven Isocyanat-Endgruppen enthalten und die zweite Komponente ein hydroxyfunktionelles Polyol oder hydroxyfunktionelles Polyurethan. Es kann aber auch das erfindungsgemäße reaktive Polyurethan als Härter für eine hydroxyfunktionelle Komponente verwendet werden, wobei die hydroxyfunktionelle Komponente entweder eines oder mehrerer der vorgenannten Polyole oder ein hydroxylgruppenhaltigen Polyurethanprepolymer enthält.

Bei der Verwendung der erfindungsgemäßen reaktiven Polyurethane zur Herstellung reaktiver Schmelzklebstoffe (PUR-Hotmelts) werden die Polyolkomponenten so ausgewählt, dass die Zusammensetzung bei Raumtemperatur fest ist. Dies kann einerseits dadurch geschehen, dass feste amorphe und/oder feste kristalline Polyhydroxyverbindungen eingesetzt werden, es kann jedoch auch dadurch geschehen, dass ein erheblicher Anteil an kurzkettigen Polyhydroxyverbindungen mit verwendet wird, da durch die hohe Konzentration an Urethangruppierungen diese Zusammensetzungen ebenfalls bei Raumtemperatur fest sind. Auswahlkriterien für die Polyole finden sich z.B. in dem Aufsatz von H. F. Huber und H. Müller in "Shaping Reactive Hotmelts Using LMW Copolyesters, "Adhesive Age", November 1987, Seite 32 bis 35.
Literatur bekannte PUR-Hotmelts verfestigen sich bei Abkühlung durch Kristallisation oder amorphes Erstarren des Weichsegments (beispielsweise ein Polyesterblock). Durch Umsetzung von 2,4'-MDI mit > 97% 2,4'-MDI-Anteil und überwiegend kristallinen Diolen mit einem Molekulargewicht von 60g/mol bis 2000g/mol wird ein reaktives Polyurethan mit einem Schmelzpunkt von 80°C bis 120°C erhalten. Dieses Polyurethan wird in Kombination mit insbesondere flüssigen Polyol-Härtern als Hotmelt mit den üblichen Applikationstechnologien auf die zu verklebenden Substrate aufgetragen und bewirkt während des Abkühlvorgangs eine schnelle Abbindung mit hoher Anfangsfestigkeit.

Um die Bildung der reaktiven Polyurethan- Zusammensetzung bei der Herstellung und/oder die Feuchtigkeitsvernetzung nach der Applikation des Kleb-/Dichtstoffes zu beschleunigen, können neben den bereits metallorganischen Katalysatoren auch aliphatische tertiäre Amine dem erfindungsgemäßen reaktiven Polyurethan zugesetzt werden.
Unter den tertiären Aminen sind auch solche geeignet, die zusätzlich noch gegenüber den Isocyanaten reaktive Gruppen tragen, insbesondere Hydroxyl-und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bisdimethylaminoethylether (Calalyst A 1, UCC), Tetramethylguanidin, Bisdimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbomane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin. Die Katalysatoren können auch in oligomerisierter oder polymerisierter Form vor-liegen, z.B. als N-methyliertes Polyethylenimin.
Ganz besonders bevorzugte Katalysatoren sind jedoch die Derivate des Morpholins. Konkrete Beispiele für geeignete Morpholino-Verbindungen sind Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethyl)ether.
Die vorgenannten Morpholin-Derivate weisen eine besonders hohe katalytische Aktivität, insbesondere der Wasser- (Feuchtigkeits-) Isocyanat-Reaktion, auf. Deshalb sind bereits sehr niedrige Katalysatorkonzentrationen hocheffizient für Vernetzung bzw. Aushärtung der reaktiven Kleb-/Dichtstoffe, Montageschäume, Vergussmassen sowie der Weich-, Hart- und Integralschäume.
Die Konzentrationen des dem erfindungsgemäßen reaktiven Polyurethan zugesetzten Katalysators in der Klebstoff-Formulierung können zwischen 0,001 und 2 Gew.-%, vorzugsweise zwischen 0,02 und 0,9 Gew.-% liegen.

Weiterhin kann das erfindungsgemäße reaktive Polyurethan oder die erfindungsgemäße reaktive Polyurethan-Zusammensetzung ggf. zusätzlich Stabilisatoren, haftvermittelnde Zusätze wie klebrigmachende Harze, Füllstoffe, Pigmente, Weichmacher und/oder Lösungsmittel enthalten.
Als "Stabilisatoren" im Sinne dieser Erfindung sind einerseits Stabilisatoren zu verstehen, die eine Viskositätsstabilität des reaktiven Polyurethans oder der reaktiven Polyurethan-Zusammensetzung während der Herstellung, Lagerung bzw. Applikation bewirken. Hierfür sind z.B. monofunktionelle Carbonsäurechloride, monofunktionelle hochreaktive Isocyanate, aber auch nichtkorrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten des reaktiven Polyurethans oder der reaktiven Polyurethan-Zusammensetzung und zum anderen nach den Applikationsbedingungen sowie den zu erwartenden Belastungen des ausgehärteten Produktes. Wenn das reaktive Polyurethan oder die reaktive Polyurethan-Zusammensetzung überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des reaktiven Polyurethans oder der reaktiven Polyurethan-Zusammensetzung aus Polyesterbausteinen, können Hydrolyse-Stabilisatoren, z.B. vom Carbodiimid-Typ, eingesetzt werden.

Werden die erfindungsgemäßen reaktiven Polyurethane beziehungsweise die erfindungsgemäßen reaktiven Polyurethan-Zusammensetzungen in Schmelzklebstoffen, Kaschierklebstoffen oder Kleb-/Dichtstoffen eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B. Bentone, pyrogene Kieselsäuren, Harnstoffderivate, fibrillierte oder Pulp-Kurzfasem) oder Farbpasten bzw. Pigmente enthalten.
Vorzugsweise in reaktiven Schmelzklebstoffen eigenen sich als haftungsverstärkende Zusätze insbesondere wanderungsfähige Polyisocyanate, wobei diese einen wesentlich geringeren Dampfdruck als MDI aufweisen sollen.
Als wanderungsfähige, haftungsverstärkende Polyisicyanate mit wesentlich geringerem Dampfdruck als MDI kommen dabei hauptsächlich Triisocyanate in Frage, wie zum Beispiel der Thiophosphor-säure-tris-(p-Isocyanato-Phenylester), das Triphenylmethan-4,4',4"-Triisocyanat sowie insbesondere die verschiedenen isomeren trifunktionellen Homologen des Diphenylmethandiisocyanats (MDI). Zu den letzteren gehören hauptsächlich das Isocyanto-bis-((4-Isocyanatophenyl)-methyl)-benzol, das 2-Isocyanato-4-((3-Isocyanatophenyl)methyl)-1-((4-Isocyanatophenyl)methyl)-benzol, das 4-Iso-cyanato-1,2-bis((4-Isocyanatophenyl)methyl)-benzol, das 1-Isocyanato-4-((2-Isocyanatophenyl)methyl)-2-((3-Isocyana-tophenyl)methyl)benzol, das 4-Isocyanato-α-1-(o-Isocyanatophenyl)-a-3(p-Isocyanatophenyl)-m-Xylol, das 2-Isocyanato-(o-Isocyanatophenyl)-a'(p-Isocyanatophenyl)m-Xylol, das 2-Isocyanato-1,3-bis((2-Isocyanatophenyl)methyl)-benzol, das 2-Isocyanato-1,4-bis((4-Isocyanato-phenyl)methyl)-benzol, das Isocyanato-bis((Isocyanatophenyl)methyl)-benzol, das 1-Isocyanato-2,4-bis((bis((4-Isocyanatophenyl) methyl)-benzol sowie deren Mischungen, gegebenenfalls mit einem geringfügigem Anteil an höherfunktionellen Homologen. Da die trifunktionellen Homologen des Diphenylmethandiisocyanates analog zum Diphenylmethandiisocyanat durch Kondensation von Formaldehyd mit Anilin mit nachfolgender Phosgenierung hergestellt werden, sind im technischen Gemisch der trifunktionellen Homologen des MDI auch noch Anteile an Diisocyanat vorhanden, dieser darf jedoch nicht mehr als 20 Gew.-%, bezogen auf die Triisocyanatmischung, betragen und der Anteil an tetra- bzw. höherfunktionellen Isocyanaten nicht mehr als 25 Gew.-%.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Auch bei diesen Addukten gelten die oben genannten Einschränkungen bezüglich des Diisocyanatgehaltes und der höherfunktionellen Bestandteile.

Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäßen Zusammensetzungen geeignet, sofern der Anteil an Diisocyanaten <1 Gew.-% beträgt und der Anteil an tetra- bzw. höherfunktionellen Isocyanaten nicht mehr als 25 Gew.-% ist.
Wegen ihrer guten Verfügbarkeit sind dabei die vorgenannten Trimerisierungsprodukte des HDI und des IPDI besonders bevorzugt.
Die vorgenannten wanderungsfähigen Polyisocyanate können direkt bei der zweiten Reaktionsstufe zur Herstellung der reaktiven Polyurethan-Zusammensetzung mitverwendet werden. Eine weitere Möglichkeit besteht in einer separaten Zumischung der haftungsverstärkenden, wanderungsfähigen Polyisocyanate bei einem späteren Formulierungsschritt.

Bei der Verwendung als Kaschierklebstoff kann zum Erreichen bestimmter zusätzlicher Eigenschaften, wie thermischer und chemischer Beständigkeit, noch ein Zusatz von Epoxidharzen, Phenolharzen, Novolaken, Resolen oder Melaminharzen und ähnliches notwendig sein. Außerdem können in diesem Falle die reaktiven Polyurethan-Zusammensetzungen auch in Lösung hergestellt werden, vorzugsweise in polaren, aprotischen Lösungsmitteln. Die bevorzugten Lösungsmittel haben dabei einen Siedebereich von etwa 50°C bis 140°C. Obwohl auch halogenierte Kohlenwasserstoffe geeignet sind, werden ganz besonders Ethylacetat, Methylethylketon (MEK) oder Aceton bevorzugt.

Die erfindungsgemäßen reaktiven Polyurethane und die daraus hergestellten reaktiven Polyurethan-Zusammensetzungen werden in reaktiven ein- und zweikomponentigen Kleb-/Dichtstoffen, Montageschäumen, Vergussmassen sowie in Weich-, Hart- und Integralschäumen verwendet. Die Verwendung geschieht beispielsweise wie bei üblichen bekannten Polyurethan-Kleb-/Dichtstoffe als reaktiver ein- oder zweikomponentiger Kleb-/Dichtstoff, als reaktiver Schmelzklebstoff oder als lösungsmittelhaltiger Klebstoff in ein- oder zweikomponentiger Form. Wesentlicher Vorteil gegenüber den bekannten reaktiven ein- und zweikomponentigen Kleb-/Dichtstoffen, Montageschäumen, Vergussmassen sowie Weich-, Hart- und Integralschäumen ist der signifikant niedrige Anteil an arbeitshygienisch bedenklichen monomeren Diisocyanaten mit einem Molekulargewicht unterhalb 500g/mol. Ein weiterer Vorteil gegenüber bekannten monomerarmen reaktiven Polyurethanen ist wirtschaftlicher Art, da die Monomerarmut ohne aufwendige und kostspielige Aufarbeitungsschritte erzielt wird. Durch die schonende, selektive Reaktion werden reaktive Polyurethane erhalten, die beispielsweise frei sind von den üblicherweise bei thermischen Aufarbeitungschritten anfallenden Nebenprodukten wie Vemetzungs- oder Depolymerisationsprodukten. Durch die selektive Reaktion asymmetrischer Diisocyanate mit sekundären Diolen werden sterisch abgeschirmte reaktive Polyurethane erhalten, die Polyurethan-Schmelzklebstoffe mit ausgezeichneter Schmelzstabilität ergeben.
Der Gegenstand der Erfindung soll anhand der folgenden Beispiele näher erläutert werden.

### Beispiele

### 1. Herstellung von reaktiven Polyurethanen

Die reaktiven Polyurethane gemäß Tabelle 1 wurden hergestellt, indem ein reines 2,4'-MDI mit einem Gehalt an 2,4'-Isomeren von mindestens 97,5% als monomeres asymmetrisches Diisocyanat vorgelegt und auf 50 °C aufgeheizt wurde. Anschließend wurde die Heizung abgestellt und handelsübliches Polypropylenglykol mit einem Molekulargewicht von ca. 760 innerhalb von 10 Minuten zudosiert. Die Mischung wurde durch Zugabe von 0,03% Tosylisocyanat acidifiziert. Bei einer Reaktionstemperatur von 60°C (Thermostat) wurde die Umsetzung über einen Zeitraum von 22 Stunden und bei einer Reaktionstemperatur von 130°C über einen Zeitraum von 4 Stunden fortgeführt.

Das NCO/OH-Verhältnis ist der Spalte "Index" in Tabelle 1 zu entnehmen.

**Tab. 1**

| **Produkt** | **Index** | **Reaktionstemperatur** | **Katalysator** | **MDI-Gehalt** |
|---|---|---|---|---|
| A | 1,7 | 130°C | Ohne | 1,4% |
| B | 1,7 | 60°C | Ohne | 0,9% |
| C | 1,5 | 130°C | Ohne | 0,5% |
| D | 1,5 | 60°C | Ohne | 0,2% |
| E | 1,5 | 60°C | 0,1% DMDEE | 0,18% |
| F | 1,5 | 60°C | 0,01% DBTL | 0,06% |

**Tab. 2**

| **Produkt** | **NCO-Gehalt : theor.** / **gefunden** | | **Viskosität bei 130°C** |
|---|---|---|---|
| D | 3,66% | 3,52% | 210 mPas |
| F | 3,66% | 3,35% | 370 mPas |

### 2. Umsetzung der reaktiven Polyurethane mit Polyolen

Das reaktive Polyurethan F (Tabelle 1) sowie handelsübliches reines 4,4'-MDI wurden nach bekannter Art mit einem hydroxyfunktionellen Polyester aus Dodecandisäure und 1,6-Hexandiol, mit einer OH-Zahl 30 bei einem Indexwert von 2,2 und einer Reaktionstemperatur von 130°C umgesetzt.

**Tab. 3**

| | **PU-Zusammensetzung aus Dynacoll 7380 und** | |
|---|---|---|
| | **Produkt F (Erfindungsgemäß)** | **4,4'-MDI (Vergleich)** |
| Viskosität bei 130°C | 24.800 mPas | 6.200 mPas |
| Offene Zeit | 70s | 45 s |
| Abbindezeit | 25s | 25 s |
| MDI-Monomergehalt | <0,1% (an der Nachweisgrenze) | 2,9% |

Die PU-Zusammensetzung gemäß Spalte 1 von Tabelle 3 zeigt gute Eigenschaften als reaktiver Schmelzklebstoff.
Die Haftung auf Kunststoffen, wie beispielsweise ABS und w-PVC Folien für die Fensterprofilummantelung ist sehr gut, auch nach Alterung über 7 Tage bei 95°C und 95% r.F. Demgegenüber platzt die PU-Zusammensetzung gemäß Spalte 2 der Tabelle 3 spröde ab.

## Patentansprüche

1. Verfahren zur Herstellung von reaktiven Polyurethanen mit freien Isocyanatgruppen aus monomeren asymmetrischen Diisocyanaten und mehrfunktionellen Alkoholen, bei dem man die monomeren asymmetrischen Diisocyanate mit mehrfunktionellen Alkoholen umsetzt, wobei
- man als monomeres asymmetrisches Diisocyanat Diphenylmethan-2,4'-Diisocyanat (2,4'-MDI) mit einem Gehalt an 4,4'-MDI und 2,2'-MDI von < 5% einsetzt und wobei der Gehalt an 2,2'-MDI unter 0,4% liegt,
- man als mehrfunktionellen Alkohol mindestens ein Diol mit einem Molekulargewicht von 60 g/mol bis 2000 g/mol einsetzt und
- man das Verhältnis Isocyanat-Gruppen zu Hydroxyl-Gruppen im Bereich zwischen 1,05 :1 und 2,0 : 1 einstellt und
- man gewünschtenfalls eine metallorganische Verbindung als Katalysator zufügt.

2. Verfahren nach Anspruch 1, **dadurch gekennzeichnet, dass** das reaktive Polyurethan bei 100 °C eine Viskosität im Bereich von 20 mPas bis 3000 mPas aufweist (gemessen nach Brookfield, ISO 2555).

3. Verfahren nach Anspruch 1 oder 2, **dadurch gekennzeichnet, daß** der Gehalt an monomeren asymmetrischem Diisocyanat im reaktiven Polyurethan 0,01 bis 0,3 Gew.% beträgt.

4. Verfahren nach mindestens einem der Ansprüche 1 bis 3, **dadurch gekennzeichnet, dass** man als Diol mindestens ein lineares oder schwach verzweigtes C2-C18-Alkandiol einsetzt.

5. Verfahren nach mindestens einem der Ansprüche 1 bis 4, **dadurch gekennzeichnet, dass** man als Katalysator eine metallorganische Verbindung des Zinns, Bleis, Eisens, Titans, Wismuts oder Zirkoniums, wie Tetraisopropyltitanat, Blei-Phenyl-Ethyl-Dithiocarbaminat, Zinn(II)salze von Carbonsäuren, z.B. Zinn-II-acetat, -ethylhexoat und -diethylhexoat, einsetzt.

6. Verfahren nach mindestens einem der Ansprüche 1 bis 5, **dadurch gekennzeichnet, dass** man die Reaktion zwischen 30 °C und 130 °C in Gegenwart einer Zinn-(IV)-Verbindung als Katalysator durchführt.

7. Verfahren nach mindestens einem der Ansprüche 1 bis 6, **dadurch gekennzeichnet, dass** man die Reaktion zwischen 40 und 75 °C durchführt.

8. Verfahren nach mindestens einem der Ansprüche 1 bis 7, **dadurch gekennzeichnet, dass** man das Verhältnis Isocyanat-Gruppen zu Hydroxyl-Gruppen im Bereich zwischen 1,05 :1 und 1,5 : 1 einstellt.

9. Reaktive Polyurethane mit freien Isocyanat-Gruppen, erhältlich durch das Verfahren nach mindestens einem der Ansprüche 1 bis 8.

10. Ein- oder zweikomponentige Kleb- / Dichtstoffe, enthaltend reaktive Polyurethane nach Anspruch 9.

11. Verwendung eines reaktiven Polyurethans, hergestellt nach mindestens einem der Ansprüche 1 bis 8, zur Herstellung reaktiver ein- oder zweikomponentiger Kleb-/Dichtstoffe.

12. Verwendung eines reaktiven Polyurethans nach Anspruch 11 zur Herstellung reaktiver Schmelzklebstoffe und Iösungsmittelfreier oder Iösungsmittelhaltiger Kaschierklebstoffe.

13. Verwendung eines reaktiven Polyurethans, hergestellt nach mindestens einem der Ansprüche 1 bis 8, zur Herstellung von Montageschäumen, Vergussmassen sowie Weich-, Hart- und Integralschäumen.

## Claims

1. Process for preparing reactive polyurethanes containing free isocyanate groups formed from monomeric asymmetric diisocyanates and polyfunctional alcohols, in which the monomeric asymmetric diisocyanates are reacted with polyfunctional alcohols, wherein
- diphenylmethane-2,4'-diisocyanate (2,4'-MDI) containing < 5 % 4,4'-MDI and 2,2'-MDI is used as the monomeric asymmetric diisocyanate, the 2,2'-MDI content being less than 0.4 %,
- at least one diol with a molecular weight of from 60 g/mol to 2,000 g/mol is used as the polyfunctional alcohol and
- the ratio of isocyanate groups to hydroxyl groups is adjusted in the range between 1.05:1 and 2.0:1 and
- an organometallic compound is added as a catalyst if desired.

2. Process according to claim 1, **characterised in that** the reactive polyurethane has a viscosity at 100 °C in the range from 20 mPas to 3,000 mPas (measured by the Brookfield method, ISO 2555).

3. Process according to either claim 1 or claim 2, **characterised in that** the content of monomeric asymmetric diisocyanate in the reactive polyurethane is from 0.01 to 0.3% by weight.

4. Process according to at least one of claims 1 to 3, **characterised in that** at least one linear or slightly branched C2-C18 alkanediol is used as the diol.

5. Process according to at least one of claims 1 to 4, **characterised in that** an organometallic compound of tin, lead, iron, titanium, bismuth or zirconium, such as tetraisopropyl titanate, lead phenyl ethyl dithiocarbamate, tin(II) salts of carboxylic acids, for example tin(II) acetate, ethylhexoate and diethylhexoate is used as a catalyst.

6. Process according to at least one of claims 1 to 5, **characterised in that** the reaction is carried out at between 30 °C and 130 °C in the presence of a tin(IV) compound as a catalyst.

7. Process according to at least one of claims 1 to 6, **characterised in that** the reaction is carried out at between 40 and 75 °C.

8. Process according to at least one of claims 1 to 7, **characterised in that** the ratio of isocyanate groups to hydroxyl groups is adjusted in the range between 1.05:1 and 1.5:1.

9. Reactive polyurethanes containing free isocyanate groups obtainable by the process according to at least one of claims 1 to 8.

10. Single-component or two-component adhesives/sealants containing reactive polyurethanes according to claim 9.

11. Use of a reactive polyurethane prepared according to at least one of claims 1 to 8 for preparing reactive single-component or two-component adhesives/sealants.

12. Use of a reactive polyurethane according to claim 11 for preparing reactive hotmelt adhesives and solvent-free or solvent-containing laminating adhesives.

13. Use of a reactive polyurethane prepared according to at least one of claims 1 to 8 for preparing bonding foams, sealing compounds as well as flexible, rigid and integral foams.

## Revendications

1. Procédé pour la préparation de polyuréthanes réactifs comprenant des groupes isocyanates libres à partir de diisocyanates asymétriques monomères et d'alcools polyfonctionnels, dans lequel on fait réagir les diisocyanates asymétriques monomères avec des alcools polyfonctionnels,
- en mettant en oeuvre, à titre de diisocyanate asymétrique monomère, le diphénylméthane-2,4'-diisocyanate (2,4'-MDI) possédant une teneur en 4,4'-MDI et en 2,2'-MDI inférieure à 5 %, la teneur en 2,2'-MDI étant inférieure à 0,4 % ;
- en mettant en oeuvre à titre d'alcool polyfonctionnel, au moins un diol possédant un poids moléculaire de 60 g/mol à 2000 g/mol ; et
- en réglant le rapport des groupes isocyanates aux groupes hydroxyle dans la plage entre 1,05 : 1 et 2,0 : 1 ; et
- en ajoutant, si on le souhaite, un composé organométallique pour faire office de catalyseur.

2. Procédé selon la revendication 1, **caractérisé en ce que** le polyuréthane réactif présente, à 100 °C, une viscosité dans la plage de 20 mPas à 3000 mPas (mesurée conformément à Brookfield, norme ISO 2555).

3. Procédé selon la revendication 1 ou 2, **caractérisé en ce que** la teneur en diisocyanate asymétrique monomère dans le polyuréthane réactif s'élève de 0,01 à 0,3 % en poids.

4. Procédé selon au moins une des revendications 1 à 3, **caractérisé en ce qu'**on met en oeuvre, à titre de diol, au moins un alcanediol en C₂-C₁₈ linéaire ou faiblement ramifié.

5. Procédé selon au moins une des revendications 1 à 4, **caractérisé en ce qu'**on met en oeuvre, à titre de catalyseur, un composé organométallique de l'étain, du plomb, du fer, du titane, du bismuth ou du zirconium, tel que le titanate de tétraisopropyle, le phényl-éthyl-dithiocarbamate de plomb, des sels d'étain(II) d'acides carboxyliques par exemple l'acétate d'étain(II), l'éthylhexoate d'étain(II) et le diéthylhexoate d'étain(II).

6. Procédé selon au moins une des revendications 1 à 5, **caractérisé en ce qu'**on effectue la réaction entre 30 °C et 130 °C en présence d'un composé d'étain(IV) à titre de catalyseur.

7. Procédé selon au moins une des revendications 1 à 6, **caractérisé en ce qu'**on effectue la réaction entre 40 et 75 °C.

8. Procédé selon au moins une des revendications 1 à 7, **caractérisé en ce qu'**on règle le rapport des groupes isocyanates aux groupes hydroxyle dans la plage entre 1,05 : 1 et 1,5 : 1.

9. Polyuréthanes réactifs comprenant des groupes isocyanates libres, qui peuvent être obtenus via le procédé selon au moins une des revendications 1 à 8.

10. Substances adhésives/d'étanchéité à un ou à deux composants contenant des polyuréthanes réactifs selon la revendication 9.

11. Utilisation d'un polyuréthane réactif, préparé conformément à au moins une des revendications 1 à 8, pour la fabrication de substances adhésives/d'étanchéité réactives à un ou deux composants.

12. Utilisation d'un polyuréthane réactif selon la revendication 11, pour la fabrication d'adhésifs fusibles réactifs et d'adhésifs de contrecollage sans solvants ou à base de solvants.

13. Utilisation d'un polyuréthane réactif, fabriqué conformément à au moins une des revendications 1 à 8, pour la fabrication de mousses de montage, de matières de scellement, ainsi que des mousses souples, des mousses dures et des mousses à peau intégrée.
